Europäisches Patentamt

European Patent Office

Office européen des brevets

(19)

(11) Numéro de publication: **0 201 911**

**B1**

(12)  **FASCICULE DE BREVET EUROPÉEN**

(45) Date de publication du fascicule du brevet:
**19.04.89**

(51) Int. Cl.⁴: **B 23 H 7/06**

(21) Numéro de dépôt: **86106466.5**

(22) Date de dépôt: **13.05.86**

(54) **Dispositif pour orienter les têtes de guidage d'un fil-électrode pour découpage par électroérosion.**

(30) Priorité: **17.05.85 CH 2122/85**

(43) Date de publication de la demande:
**20.11.86 Bulletin 86/47**

(45) Mention de la délivrance du brevet:
**19.04.89 Bulletin 89/16**

(84) Etats contractants désignés:
**DE FR GB IT**

(56) Documents cité:
**EP-A-0 084 083**
**US-A-4 431 896**

(73) Titulaire: **CHARMILLES TECHNOLOGIES S.A., rue du Pré- de- la- Fontaine 8-10, CH- 1242 Satigny (CH)**

(72) Inventeur: **Girardin, Roger, 8, chemin de l'Echarpine, Ch- 1214 Vernier (CH)**

(74) Mandataire: **Blum, Rudolf Emil Ernst, c/o E. Blum & Co Patentanwälte Vorderberg 11, CH- 8044 Zürich (CH)**

LIBER, STOCKHOLM 1989

## Description

Dans les machines à découper par étincelage à l'aide d'un fil-électrode ce dernier est tendu et défile entre deux têtes de guidage situées de chaque côté de la zone d'étincelage comprise entre ce fil et la pièce à découper. Pour effectuer une découpe oblique les têtes de guidage sont décalées transversalement l'une par rapport à l'autre pour donner à l'axe du fil une inclinaison déterminée qui peut atteindre plusieurs dizaines de degrés. On sait que pour maintenir une injection de liquide d'usinage coaxiale au fil et éviter une erreur d'usinage due à un pliage du fil à la sortie de ses guides il est nécessaire d'orienter les têtes de guidage avec leur buse d'injection selon le décalage latéral de ces têtes de manière à les orienter dans la même direction que le fil.

De nombreuses solutions ont déjà été proposées pour résoudre ce problème; l'une consiste à réaliser une liaison mécanique ou électrique entre les déplacements transversaux des textes de guidage et l'orientation des guides sur ces têtes (Brevet US-A-4 431 896). La synchronisation de l'orientation des deux têtes de guidage peut être réalisée soit par une tringlerie à pentographe (EP-A-2-0 084 083) soit par des moteurs électriques montés sur la tête de guidage.

Une machine à découper par électroérosion une pièce-électrode au moyen d'un fil-électrode dévidé entre deux têtes de guidage, comportant un dispositif pour orienter le têtes de guidage dans l'axe du fil, deux couples de vérins à double action, deux couples de vérins-récepteurs, des conduites hydrauliques pour transmettre les mouvements de chacun des vérins-émetteurs à un couple de vérins-récepteurs reliés aux têtes de guidage afin d'assurer leur orientation, est connue du document EP-A-1-198 230 (Article 54.3 de la CBE).

Toutes ces techniques connues sont compliquées et surtout elles sont très encombrantes ce qui est un gros défaut étant donné le peu de place disponible dans la région des têtes de guidage du fil. Le but de l'invention est de réaliser une installation remplissant les mêmes fonctions que celles des systèmes connus mais avec des moyens plus simples et moins encombrants.

A cet effet, l'invention est définie comme il est dit à la revendication 1.

L'invention sera maintenant illustrée plus en détail par la description d'un mode de réalisation et à l'aide du dessin, dans lequel:

la fig. 1 montre la structure de principe d'une installation utilisant un mode de réalisation de l'invention,

la fig. 2 montre une vue en coupe partielle de la commande d'une tête de guidage, et

les fig. 3 et 4 montrent des vues en coupe d'une tête de guidage commandée hydrauliquement.

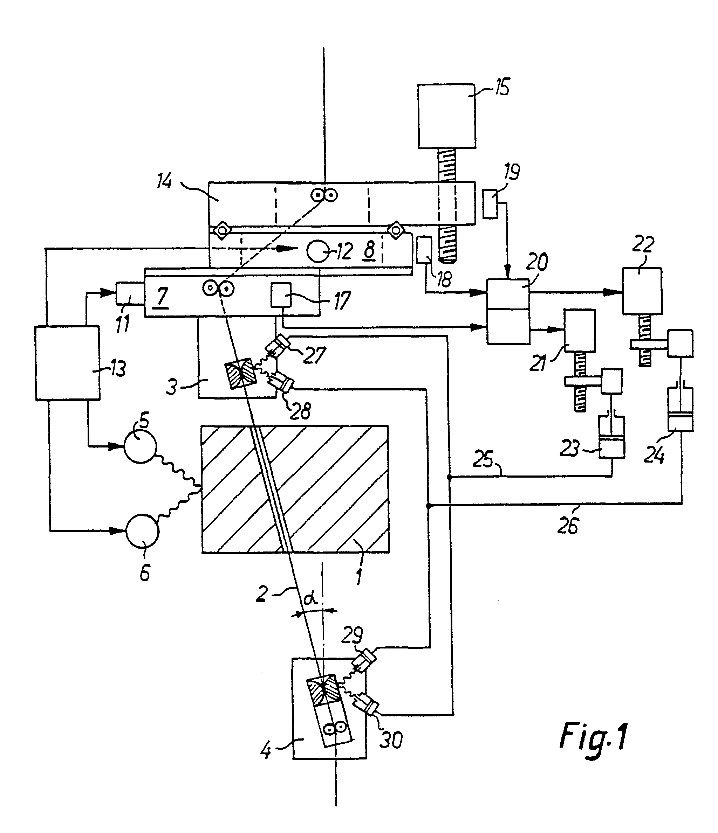

Dans la figure 1, qui montre très schématiquement différentes parties d'une installation de découpe par électroérosion utilisant l'invention, 1 désigne la pièce à découper, 2 le fil-électrode, 3 la tête de guidage supérieure, 4 la tête de guidage inférieure, 5 et 6 deux moteurs servant à déplacer la pièce 1 dans la direction x, respectivement y. Pour obtenir l'inclinaison désirée (désignée par $\alpha$ dans la figure) du fil par rapport à la normale au plan de découpe la tête de guidage supérieure 3 est portée par une table croisée dont les plateaux 7 et 8 sont mus par les moteurs 11 et 12 dans deux directions différentes u et v, parallèles au plan de découpe. Ces moteurs, de même que les moteurs 5 et 6, sont commandés par une unité de commande numérique 13. La table croisée est elle-même supportée par une embase 14 pouvant être déplacée en direction verticale sous l'action d'un moteur 15 pour adapter l'écartement entre les têtes de guidage à l'épaisseur de la pièce à découper 1.

Pour obtenir les données nécessaires à l'orientation des têtes de guidage, les mouvements de la table croisée dans les directions u et v, c'est-à-dire le décalage latéral des têtes de guidage l'une par rapport à l'autre, sont mesurés par deux capteurs 17 et 18, tandis que la position en direction verticale de l'embase 14 est déterminée par un capteur 19. Ce dernier permet de déterminer l'écartement, mesuré à la verticale, entre les têtes de guidage. Les signaux émis par les capteurs sont transmis, par l'intermédiaire de circuits correcteurs 20 destinés à corriger les données relatives aux positions dans les directions u et v en fonction de l'écartement vertical entre les têtes de guidage, à deux moteurs 21 et 22. Chacun de ces moteurs déplace le piston d'un des vérins-émetteur 23 et 24 qui agissent, par l'intermédiaire d'une paire de conduites hydrauliques 25, 26 et de vérins-récepteurs 27 à 30 sur les têtes de guidage 3 et 4 dont ils commandent l'orientation.

Il est à remarquer que l'on peut réaliser une commande hydraulique de l'orientation des têtes de guidage en choisissant d'autres méthodes que celle décrite ci-dessus pour actionner les vérins-émetteurs. Ainsi les circuits correcteurs 20 destinés à rendre l'inclinaison du fil indépendante de l'écartement vertical des têtes peuvent être commandés directement par les signaux commandant les moteurs 11 et 12. Il n'est d'ailleurs pas nécessaire de commander les vérins-émetteurs par l'intermédiaire de signaux électriques reflétant les mouvements de la table croisée, cette commande pouvant p. ex. être réalisée par une liaison mécanique à rapport variable entre les déplacements en directions u et v de la table croisée et ceux des pistons correspondants des vérins-émetteurs.

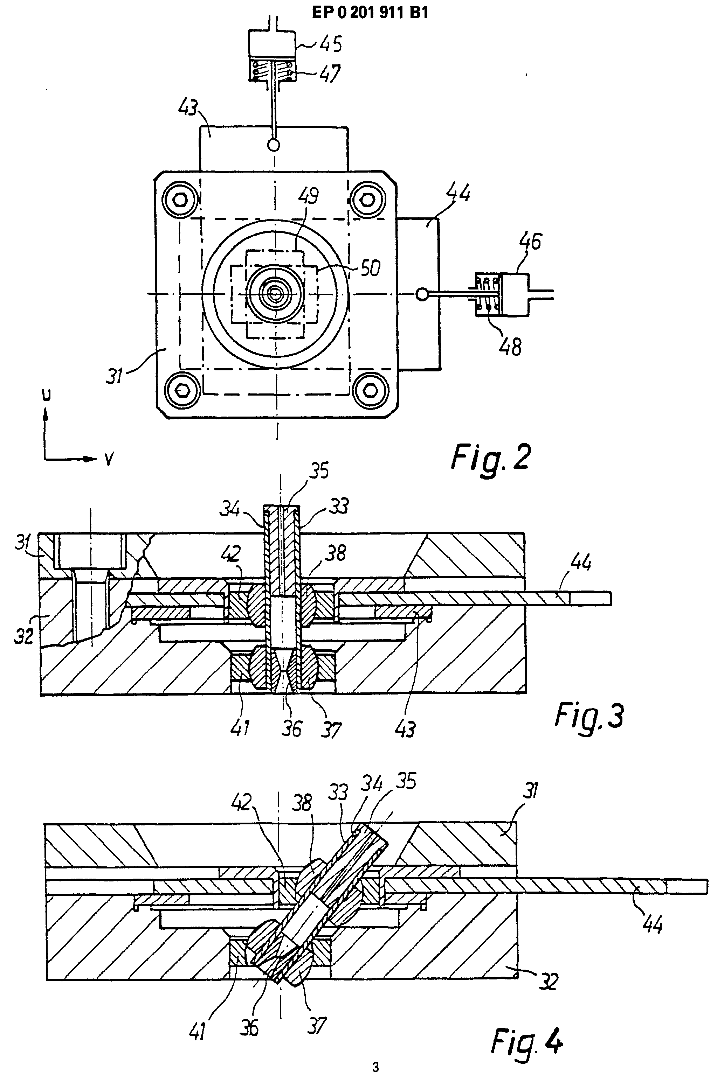

Les figures 2 à 4 représentent une forme de réalisation d'une tête de guidage dont l'orientation est commandée hydrauliquement et portent les mêmes chiffres de référence pour des pièces identiques. Les chiffres 31 et 32 désignent la partie supérieure et la partie inférieure d'un boîtier dans lequel est montée la tête de guidage proprement dite 33, qui comporte un tube 34 doublé à un bout d'un fourreau 35 et comportant près de son autre extrémité un guidage 36 dont l'orifice sert au centrage du fil-électrode (non représenté dans les figures 2 - 4) traversant le tube. Celui-ci est maintenu dans une rotule inférieure 37 centrée sur l'orifice de guidage et coulisse dans une rotule supérieure 38 qui entoure le tube environ en son milieu. La rotule inférieure 37 est montée dans une cage inférieure 41 solidaire de la partie inférieure 32 du boîtier. La rotule supérieure 38 est montée dans une cage supérieure 42 entraînée par une plaque supérieure 44 pouvant coulisser en direction v (fig. 2) sous l'action d'un vérin-récepteur 46 et entraînée par une plaque inférieure 43 pouvant coulisser en direction u sous l'action d'un vérin-récepteur 45. Chaque plaque 43 et 44 comporte une fente 49, respectivement 50 perpendiculaire à la direction de son déplacement de manière à assurer l'indépendance des déplacements de ces plaques. Les pistons des vérins-récepteurs 45 et 46 sont rappelés par des ressorts 47, respectivement 48. On voit que cet agencement permet d'orienter avec précision la tête de guidage 33 par l'action d'un fluide sous pression agissant sur les vérins-récepteurs 45 et 46.

La figure 3 montre cette tête de guidage en position droite et la figure 4 montre la même tête de guidage en position inclinée.

## Revendications

1. Machine à découper par électroérosion une pièce-électrode (1) jau moyen d'un fil-électrode (2) dévidé entre deux têtes de guidage (3, 4), cette machine comportant un dispositif pour orienter les têtes de guidage dans l'axe du fil, des vérins-émetteurs (23, 24), deux couples de vérins-récepteurs (27 à 30), des conduites hydrauliques (25, 26) pour transmettre les mouvements de chacun des vérins-émetteur (23, 24) aux deux couples de vérins-récepteurs (27, 28 et 29, 30) reliés aux têtes de guidage (3, 4) afin d'assurer leur orientation, les vérins-émetteurs (23, 24) étant seulement au nombre de deux et la machine comportant des dispositifs mécaniques ou électromécaniques agencés pour imprimer aux pistons de ces vérins-émetteurs (23, 24) des déplacements correspondant aux translations relatives dans deux directions différentes u et v d'une tête de guidage (3) par rapport à l'autre (4), ainsi que des dispositifs mécaniques agencés pour imprimer à l'une des extrémités de chacune des têtes de guidage (3, 4) des translations dans deux directions différentes, ces dispositifs étant commandés par le déplacement des pistons des vérins-récepteurs, cette translation des extrémités de chacune des têtes de guidage (3, 4) permettant d'assurer leur orientation angulaire.

2. Machine selon la revendication 1, dont les dispositifs pour imprimer des translations à l'une des extrémités des têtes de guidage (33) comportent deux rotules (37, 38) solidaires de chacune de ces têtes, la première (37) étant montée dans une cage (41) fixe et la seconde (38) déplacée dans les directions u et v par les vérins-récepteurs (45, 46).

2. Machine selon la revendication 2, comportant deux plaques (43, 44) coulissant respectivement dans lesdites directions u et v et solidaires respectivement des vérins-récepteurs (45, 46), chaque plaque comportant une fente (49, 50) perpendiculaire à la direction de son déplacement et dans laquelle coulisse la seconde rotule.

4. Machine selon la revendication 1, dont les vérins-émetteurs (23, 24) sont commandés par des circuits électriques correcteurs (20) agencés pour prendre en compte le décalage latéral et l'écartement vertical des têtes de guidage (3, 4).

5. Machine selon la revendication 4, dont les circuits correcteurs (20) sont commandés par des signaux émis par une unité de commande numérique (13).

6. Machine selon la revendication 4, dont les circuits correcteurs (20) sont commandés par des signaux émis par des capteurs (17, 18, 19) mesurant les mouvements d'une table à mouvements croisés (7, 8, 14).

## Patentansprüche

1. Elektroerosionsmaschine zum schneiden eines als Elektrode wirkenden Werkstückes (1) mittels eines zwischen zwei Führungsköpfen (3, 4) ablaufenden Elektrodendrahtes (2), wobei die Maschine eine Vorrichtung zum Ausrichten der Führungsköpfe mit der Draht-Mittellinie, Geber-Einheiten (23, 24), zwei Paare von Nehmer-Einheiten (27 bis 30), hydraulische Leitungen (25, 26) zum Übertragen der Bewegungen jedes der Geber-Einheiten (23, 24) auf beide Paare von Nehmer-Einheiten (27, 28 und 29, 30), welche Leitungen mit den Führungsköpfen (3, 4) verbunden sind, um deren Orientierung zu bewerkstelligen, wobei nur zwei Geber-Einheiten (23, 24) vorhanden sind und wobei die Maschine mechanische oder elektromechanische Vorrichtungen um den Kolben dieser Geber-Einheiten (23, 24) Verschiebungen zu erteilen, die den Relativverschiebungen in zwei verschiedene Richtungen u und v eines der Führungsköpfe (3) bezuglich dem anderen (4) entsprechen, sowie mechanische Einrichtungen, um eine Extremität jedes der beiden Führungsköpfe (3, 4) in zwei unterschiedliche Richtungen zu verschieben aufweist, und wobei diese Einrichtungen durch die Verschiebungen der Kolben der Nehmer-Einheiten gesteuert sind, und diese Verschiebung der Extremitäten jedes der Führungsköpfe (3, 4) eine Einstellung ihrer winkelmässigen Orientierung gestattet.

2. Maschine nach Anspruch 1, deren Vorrichtungen zum verschieben einer Extremität der Führungsköpfe (33) je zwei mit einem der Führungsköpfe (33) verbundenen Gelenkkugeln (37, 38) anweist, von denen die erste (37) in einem festen Käfig (41) montiert ist, und die zweite durch die Nehmer-Einheiten (45, 46) in den Richtungen u und v verschoben wird.

3. Maschine nach Anspruch 2 mit zwei Platten (43, 44), die in jenen Richtungen u, respektive v gleiten und je mit den Nehmer-Einheiten (45, 46) verbunden sind, wobei jede Platte einen zu ihrer Verschiebungsrichtung senkrechten Schlitz (49, 50) aufweist, in dem die zweite Gelenkkugel gleitet.

4. Maschine nach Anspruch 1, deren Geber-Einheiten (23, 24) durch elektrische Korrekturschaltungen (20) gesteuert sind, welche eingerichtet sind, um die gegenseitige Lateral-Verschiebung und den Abstand zwischen den Köpfen (3, 4) zu berücksichtigen.

5. Maschine nach Anspruch 4, deren Korrekturschaltungen (20) durch von einer digitalen Steuereinheit (13) abgegebene Signale gesteuert werden.

6. Maschine nach Anspruch 4, deren Korrekturschaltungen (20) durch Signale gesteuert werden, die von Abtasteinheiten (17, 18, 19) abgegeben werden, welche die Bewegungen eines Kreuztisches (7, 8, 14) abnehmen.

## Claims

1. Machine for cutting a workpiece (1) acting as an electrode with an electrode wire (2) running between two guide heads (3, 4), which machine comprises a device for orienting the guide heads along the axis of the wire, master cylinder-piston assemblies (23, 24), two pairs of slave cylinder-piston assemblies (27 through 30), hydraulic pipes (25, 26) for transmitting the movements of each master assembly (23, 24) to both pairs of slave assemblies (27, 28 and 29, 30) connected to the guide heads (3, 4) so as to orient them, where there exist only two master assemblies (23, 24), where the machine comprises mechanical or electro-mechanical devices for imparting to the pistons of the master assemblies (23, 24), displacements which correspond to the relative translations, in two different directions u and v, of one guide head (3) with respect to the other (4), and also mechanical devices for displacing one extremity of each guide head (3, 4) in two different directions, these devices being driven by the movements of the pistons of the slave assemblies, and the displacement of the extremity of each guide head (3, 4) allowing to ensure its angular orientation.

2. Machine according to claim 1, in which the devices for displacing one extremity of the guide heads (33) comprises two balls (37, 38) fixed to each of these heads, the first (37) being held in a resting cage (41), and the second (38) being displaceable in the directions u and v through the action of the slave assemblies (45, 46).

3. Machine according to claim 2, which comprises two plates (43, 44) which glide in said directions u and v and are fixed to respective slave assemblies (45, 46), where each plate has a slit (49, 50) perpendicular to the direction of its displacement, and where the second ball glides in this slit.

4. Machine according to claim 1, where the master assemblies (23, 24) are commanded by electrical correcting circuits (20) built so as to take into account the vertical distance between the guide heads (3, 4).

5. Machine according to claim 4, where the correcting circuits (20) are commanded by signals emitted from a numeric command unit (13).

6. Machine according to claim 4, where the correcting circuits (20) are commanded by signals emitted by sensing means (17, 18, 19) which measure the movements of a cross-slide table (7, 8, 14).

Fig.1

*Fig. 2*

*Fig. 3*

*Fig. 4*